# FASCICULE DE BREVET EUROPEEN

(11) **EP 1 217 834 B1**
(45) Date de publication et mention de la délivrance du brevet: **12.11.2003**
(21) Numéro de dépôt: 01470024.9
(22) Date de dépôt: 14.12.2001
(51) Int. Cl.: H04N 7/088

(54) **Procédé et circuit de mémorisation de données numériques, et téléviseur mettant en oeuvre ledit procédé de mémorisation**
Verfahren und Schaltkreis zum Speichern von digitalen Daten, und Fernsehgerät zur Durchführung des Speicherungsverfahrens
Method and circuit for memorizing digital data, and television set carrying out this memorizing method

(30) Priorité: 21.12.2000 FR 0016851
(43) Date de publication de la demande: 26.06.2002
(73) Titulaire: STMicroelectronics S.A., 92120 Montrouge (FR)
(72) Inventeur: Albella, Arnaud, Cabinet Ballot, 57070 Metz (FR); Tauzia, Vincent, Cabinet Ballot, 57070 Metz (FR)
(74) Mandataire: Bentz, Jean-Paul

(56) Documents cités:
- WO-A-00/35197
- KINGHORN J R: "NEW MULTIPAGE TELETEXT DECODERS" IEEE TRANSACTIONS ON CONSUMER ELECTRONICS, IEEE INC. NEW YORK, US, vol. 37, no. 3, 1 août 1991 (1991-08-01), pages 441-448, XP000263221 ISSN: 0098-3063
- KINGHORN J: "NEW MULTIPAGE TELETEXT DECODERS" PROCEEDINGS OF THE INTERNATIONAL CONFERENCE ON CONSUMER ELECTRONICS. (ICCE). ROSEMONT, JUNE 5 - 7, 1991, NEW YORK, IEEE, US, vol. CONF. 10, 5 juin 1991 (1991-06-05), pages 266-267, XP000289031 ISBN: 0-7803-0001-7

## Description

L'invention a pour objet un procédé et un circuit de mémorisation de données numériques transmises par l'intermédiaire d'un signal vidéo. L'invention concerne également un téléviseur utilisant un tel procédé ou comprenant un tel circuit de mémorisation. L'invention est notamment intéressante pour la mémorisation de données numériques de type télétexte.

Le télétexte est un service annexe des chaînes de télévision destiné à transmettre des informations écrites en plus des informations vidéos. Ces informations écrites sont affichées sur un écran d'un téléviseur sous la forme de pages télétexte. Chaque page est transportée sous la forme d'un nombre variable de paquets de données transmis dans les intervalles de temps correspondant au retour de trame entre deux images. Un service télétexte, constitué d'un ensemble de pages numérotées, est ainsi transmis en continu, de manière cyclique. La transmission peut se faire dans l'ordre chronologique des pages, mais pas nécessairement.

Un service télétexte complet d'une chaîne de télévision peut comprendre par exemple 500 pages. La page 100 du service correspond généralement à un sommaire du service indiquant, le thème et le numéro de référence (ou numéro de page) de certaines pages du service.

L'ensemble des pages du service est diffusé de manière cyclique et un cycle de diffusion dure quelques dizaines de secondes environ. Ceci permet à un utilisateur de regarder le service sans nécessairement mémoriser l'ensemble des pages. Cette diffusion cyclique permet également à la chaîne émettrice de mettre à jour très régulièrement son service télétexte.

De manière générale, pour demander l'affichage d'une page du service, l'utilisateur indique le numéro de la page à l'aide d'une télécommande. Des commandes de déplacement de type "page suivante / page précédente lui permettent par ailleurs de se déplacer d'une page à l'autre dans le service.

Des systèmes de navigation connus, tels que les systèmes "TOP" ou "FLOF", permettent à l'utilisateur de se déplacer plus facilement dans le service et de demander l'affichage d'une page de son choix sans nécessairement connaître le numéro de référence correspondant.

Par exemple avec le système TOP, le service est divisé en blocs (ou rubriques, telles que le sport) et chaque bloc est divisé en un ou plusieurs groupes (ou sous-rubriques, telles que le tennis) comprenant un nombre variable de pages. Le système fonctionne de la manière suivante. Lorsqu'une page du service est affichée, le système de navigation TOP affiche en complément, par exemple en bas de l'écran, une liste des pages proches de la page affichée sous la forme de liens de couleur, chaque lien faisant référence à une page proche. L'utilisateur peut alors accéder très facilement aux pages d'un groupe ou d'un bloc par l'intermédiaire d'une télécommande ; l'utilisateur n'a plus besoin de rechercher leur numéro de référence en passant par le sommaire par exemple.

Ici, et dans tout ce qui suit, les expressions "proche" ou "voisin" doivent être comprises dans le sens suivant. Une page Y est dite proche d'une page X si, lorsque la page X est affichée sur l'écran, alors la probabilité est forte pour que l'utilisateur demande l'affichage de la page Y.

Par exemple, des pages ayant des numéros de référence consécutifs ou presque consécutifs (par exemple les pages 198, 199, 201, 202 sont proches de la page 200) sont proches l'une de l'autre. De même, avec le système de navigation TOP, les premières pages du bloc, du groupe, etc. auxquelles appartient la page X sont également des pages proches de la page X.

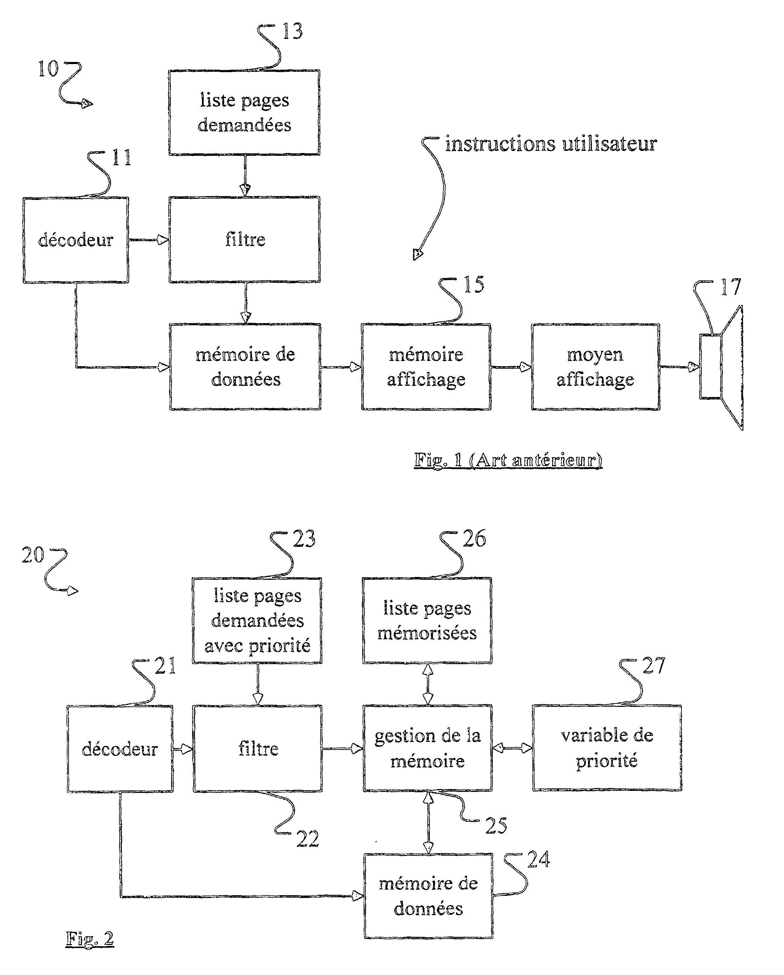

Un circuit 10 connu de réception et d'affichage d'un service télétexte comprend, conformément à la figure 1, un décodeur 11, un filtre 12, une mémoire 13, une mémoire de données 14, une mémoire d'affichage 15, un moyen d'affichage 16 et un écran 17. Le circuit 10 comprend également un circuit de détection de données couplé à une antenne (non représentés sur la figure 1), pour recevoir un signal vidéo, en extraire des données numériques relatives à un service télétexte et les fournir au décodeur 11.

La mémoire 13 comprend une liste de pages demandées repérées par leur numéro de référence respectif. La liste de pages demandées contient des références à des pages proches de la page en cours d'affichage, c'est-à-dire des pages pour lesquelles la probabilité est forte pour que l'utilisateur demande l'affichage rapidement. Le nombre de références contenu dans la liste peut être constant ou variable. Le contenu de la liste est mis à jour en fonction de la page en cours d'affichage et du système de navigation utilisé. La mise à jour est effectuée chaque fois que l'affichage d'une nouvelle page est demandé par l'utilisateur ou chaque fois qu'une mise à jour des informations relatives au système de navigation est reçue, la mise à jour pouvant être reçue après l'affichage d'une nouvelle page. La mise à jour de la liste de pages demandées est effectuée par un circuit extérieur de gestion de liste, non représenté sur la figure 1.

Le décodeur 11 reçoit les données numériques relatives à une page du service, les décode et extrait le numéro de référence correspondant. Le filtre 12 compare le numéro de référence de la page reçue avec les éléments de la liste des pages demandées et, si la page reçue est une page demandée, alors le filtre 12 transmet à la mémoire 14 un signal de commande de mémorisation. La mémoire 14 mémorise la page reçue fournie par le décodeur 11 lorsqu'elle reçoit le signal de commande de mémorisation. Sur demande de l'utilisateur, une page mémorisée dans la mémoire de données 14, est ensuite mémorisée dans la mémoire d'affichage 15. En permanence, le moyen d'affichage 16 lit et recopie sur l'écran 17 le contenu de la mémoire d'affichage 15.

Lorsque l'utilisateur demande l'affichage d'une page sur l'écran, le temps moyen nécessaire à l'apparition de cette page sur l'écran dépend essentiellement de la taille de la mémoire de données 14. En effet, si une page demandée est déjà mémorisée dans la mémoire de données 14, alors l'affichage de cette page est immédiat. Si par contre la page demandée n'est pas mémorisée dans la mémoire 14, alors il faut attendre la réception de cette page pour la voir apparaître sur l'écran, ce qui peut être relativement long sachant qu'une même page est diffusée toutes les 40 s environ.

La taille de la mémoire 14 est très variable, entre 1 et 500 koctets. Pour un circuit 10 moyen de gamme, une mémoire de l'ordre de 10 koctets est utilisée, qui permet de mémoriser environ dix pages d'un service télétexte. Ce choix résulte d'un compromis entre d'une part, la taille (en terme de surface de silicium) et le prix de la mémoire et d'autre part, le confort de l'utilisateur, qui est directement lié au temps moyen d'affichage d'une page.

Le choix des éléments de la liste des pages demandées permet de diminuer le temps moyen d'affichage d'une page sachant que la probabilité est forte pour que l'utilisateur demande l'affichage de l'une de ces pages.

Un problème apparaît cependant lorsque la mémoire de données 14 est trop petite pour mémoriser toutes les pages de la liste des pages demandées. En effet, toutes les pages de la liste sont mémorisées dans la mémoire 14 dès leur réception. En conséquence, si une nouvelle page demandée est reçue et si l'espace encore libre dans la mémoire 14 n'est pas suffisant pour mémoriser la nouvelle page reçue, alors soit une page précédemment mémorisée est effacée, totalement ou partiellement, et remplacée par la dernière page reçue, soit la dernière page reçue n'est pas mémorisée.

Ceci est particulièrement gênant pour l'utilisateur car il est possible que les pages les plus proches de la page en cours d'affichage soient effacées lors de la mémorisation d'une nouvelle page demandée. Lorsque l'utilisateur demande l'affichage d'une page proche de la page en cours d'affichage (hypothèse la plus probable), si ladite page proche à afficher a été effacée totalement ou partiellement de la mémoire 14 ou si ladite page proche à afficher n'a pas été mémorisée, alors l'utilisateur doit attendre la nouvelle émission de la dite page proche à afficher avant de la voir apparaître sur son écran. Le confort de l'utilisateur est ainsi sérieusement dégradé.

Rappelons que l'expression "plus proche de" doit être comprise dans le sens suivant : une page Y1 est plus proche d'une page X qu'une page Y2 si, lorsque la page X est affichée, la probabilité que l'utilisateur demande l'affichage de la page Y1 est plus forte que la probabilité que l'utilisateur demande l'affichage de la page Y2. Par exemple, on estime que les pages 199, 201 sont plus proches de la page 200 que les pages 198, 202.

Ce problème d'effacement de données dans la mémoire est fréquent si la liste des pages demandées contient un nombre variable de références.

Ce problème est également fréquent avec les nouvelles versions de services télétexte pour lesquelles la taille (en terme d'espace mémoire) de chaque page peut varier dans des proportions importantes. Il est alors très difficile de prévoir le nombre exact de pages que peut contenir la mémoire 14, car ce nombre est susceptible de varier en fonction des pages à mémoriser.

Pour résoudre ce problème, il est possible de limiter la liste des pages demandées à un nombre fixe de pages, en se basant par exemple sur une taille de page égale à la taille maximale d'une page d'un service. Dans ce cas, le nombre total de pages mémorisées sera nécessairement petit, ce qui augmente les risques d'attente pour le spectateur et donc diminue le confort.

Il est encore possible de choisir un nombre moyen de pages demandées. Dans ce cas, les risques d'écrasement de données dans la mémoire sont forts et en conséquence, les risques d'attente pour le spectateur augmentent également.

Ainsi, les solutions utilisées actuellement pour la mémorisation des pages télétexte ne sont pas satisfaisantes, car elles ne permettent pas d'optimiser au mieux le contenu de la mémoire tout en réduisant au maximum les risques de gêne pour le spectateur.

La demande internationale WO 00/35197 publiée le 15 juin 2000 décrit un récepteur de télévision permettant la mise en mémoire de plusieurs pages télétexte dans une mémoire prévue à cet effet, en utilisant un mécanisme de priorité.

L'invention a pour objectif de diminuer le temps moyen d'affichage d'une page télétexte afin d'améliorer le confort de l'utilisateur, et ceci sans augmenter la taille de la mémoire de données par rapport aux circuits existants, c'est-à-dire en limitant la taille (en terme de surface de silicium) et le coût du circuit.

Un but de l'invention est ainsi de mettre en oeuvre un procédé de mémorisation et de réaliser un circuit de mémorisation associé qui prennent en compte la taille des pages à mémoriser et la probabilité qu'une page soit demandée par le spectateur.

Un autre but de l'invention est de mettre en oeuvre un procédé de mémorisation et de réaliser un circuit de mémorisation associé qui garde en mémoire au moins les pages les plus proches de la page en cours d'affichage, et ce quelle que soit la page en cours d'affichage.

Ainsi, l'invention concerne un procédé de mémorisation de pages d'un service télétexte, au moins une page étant reçue par un circuit de mémorisation d'un récepteur de télévision, le circuit de mémorisation comprenant une mémoire de données pour mémoriser la au moins une page reçue, le procédé comprenant une étape d'extraction d'un numéro de référence de ladite page reçue, une étape de contrôle si ladite page reçue est une page demandée, et une étape de mémorisation de ladite page reçue.

Selon l'invention, le procédé comprend également une étape d'évaluation du contenu de la mémoire de données pour décider si ladite page reçue doit être mémorisée, en fonction d'un espace libre dans la mémoire de données et d'une importance de la page reçue, l'étape d'évaluation étant réalisée après l'étape de contrôle, l'étape de mémorisation étant réalisée si la page reçue doit être mémorisée.

Ainsi, avec le procédé de l'invention, il est tenu compte de la place disponible dans la mémoire de données et de l'importance de la page reçue pour décider si ladite page reçue doit être mémorisée ou pas.

Une page X est dite importante si elle est proche d'une page Y sélectionnée (par exemple une page affichée) par un utilisateur, c'est-à-dire si la probabilité est forte que l'utilisateur sélectionne la page Y après avoir sélectionné la page X.

Ainsi, avec l'invention, on mémorise en priorité les pages importantes si la place dans la mémoire de données est limitée. En conséquence, la probabilité pour que l'utilisateur demande une page non contenue dans la mémoire de données est diminuée et le confort de l'utilisateur est augmenté en conséquence.

Selon un mode de réalisation, l'étape d'évaluation du contenu de la mémoire comprend les étapes suivantes :
E31 : comparaison d'une taille de l'espace libre dans la mémoire de données avec une taille de la page reçue puis, si la taille de l'espace libre est inférieure à la taille de la page reçue, alors :
E32 : étude de l'importance de la page reçue.

L'importance de la page reçue est prise en compte uniquement si la place libre dans la mémoire n'est pas suffisante pour mémoriser la page reçue.

L'étape E32 d'étude de l'importance de la page reçue se décompose de la manière suivante :
E32.1 : comparaison d'un numéro de priorité de la page reçue avec une variable de priorité égale au numéro de priorité de la page de plus faible priorité contenue dans la mémoire de données puis :
   - si le numéro de priorité de la page reçue est moins important que la variable de priorité, alors réalisation d'une nouvelle étape d'extraction,
   - sinon fin de l'étape E32.

Eventuellement, l'étape E3 d'évaluation du contenu de la mémoire comprend également une étape E33 d'effacement de la page de plus faible priorité contenue dans la mémoire de données, l'étape E33 d'effacement étant effectuée après l'étape E32, l'étape E33 d'effacement étant effectuée si la page reçue a un numéro de priorité plus important que la variable de priorité.

L'étape E3 est complétée par une étape de mise à jour E34 de la variable de priorité effectuée après l'étape E31 ou après l'étape E32 ou après l'étape E33.

Selon un autre mode de réalisation, une nouvelle étape E31 est effectuée après l'étape E34 si une étape E32 a été réalisée au cours de l'étape E3.

Ceci permet de vérifier que l'espace mémoire libéré est suffisant pour mémoriser la page reçue.

L'invention concerne également un récepteur de télévision comprenant des moyens de mémorisation pour mettre en oeuvre le procédé de mémorisation de données décrit ci-dessus.

L'invention concerne encore un circuit de réception et d'affichage de pages télétexte, comportant un circuit de mémorisation comprenant :
- un décodeur pour recevoir une page d'un service télétexte et en extraire un numéro de référence de ladite page reçue, et
- une mémoire de données pour mémoriser ladite page reçue.

Selon l'invention, le circuit de mémorisation comprend également :
- un filtre pour vérifier si la page reçue est une page demandée et pour transmettre le numéro de priorité de la page reçue,
- un circuit de gestion de mémoire pour recevoir le numéro de priorité de la page reçue, et pour:
- mémoriser la page reçue si une taille d'un espace libre de la mémoire de données est suffisante, ou
- étudier l'importance de la page reçue sinon.

De préférence, le circuit de gestion de mémoire comprend des moyens pour comparer la taille de l'espace libre de la mémoire de données avec une taille de la page reçue.

Pour étudier l'importance de la page reçue, le circuit de gestion de mémoire comprend de préférence des moyens pour comparer le numéro de priorité de la page reçue avec une variable de priorité égale à un numéro de priorité d'une page de plus faible priorité contenue dans la mémoire de données.

Enfin, l'invention concerne encore un récepteur de télévision, caractérisé en ce qu'il comprend un circuit de réception et d'affichage de pages télétexte tel que décrit ci-dessus.

L'invention sera mieux comprise et d'autres caractéristiques et avantages apparaîtront à la lecture de la description qui va suivre, la description faisant référence aux dessins annexés dans lesquels :
- la figure 1, déjà décrite, est un schéma fonctionnel d'un dispositif connu utilisé pour la réception et l'affichage de pages d'un service télétexte,
- la figure 2 est un schéma fonctionnel d'un circuit de mémorisation selon l'invention, et
- la figure 3 est un diagramme de mise en oeuvre d'un procédé de mémorisation selon l'invention.

Le circuit de mémorisation 20 de la figure 2 comprend un décodeur 21, un filtre 22, une mémoire 23, une mémoire de données 24, un circuit 25 de gestion de la mémoire de données, une mémoire 26 et une mémoire 27.

Le circuit de mémorisation 20 est intégré dans un dispositif plus large de réception et d'affichage de pages télétexte, qui comprend un circuit de réception de données, un circuit d'affichage (non représentés sur la figure 2) et un circuit de mémorisation tel que celui de la figure 2.

Le circuit de réception comprend notamment une antenne associée à un circuit de détection, pour recevoir un signal vidéo, extraire du signal vidéo les données relatives à un service télétexte et les fournir au décodeur 21.

Le circuit d'affichage comprend quant à lui une mémoire d'affichage, un moyen d'affichage et un écran tels que ceux représentés sur la figure 1, la mémoire d'affichage étant connectée à la mémoire de données 24 du circuit de mémorisation de l'invention. Le circuit de détection et le circuit d'affichage ne sont ni décrits ni représentés car ils sont connus par ailleurs.

La mémoire 23 est connectée au filtre 22 pour lui fournir une liste de pages demandées du service télétexte. Cette liste est nouvelle et différente de celle habituellement utilisée dans les circuits connus. En effet, ici, chaque page est repérée par son numéro de référence (ou numéro de page) et également par un numéro de priorité associé, qui définit le degré de proximité de ladite page par rapport à la page en cours d'affichage, la page en cours d'affichage ayant un degré de priorité maximal. Si une page du service est très proche de la page en cours d'affichage, alors un numéro de forte priorité lui est associé. Inversement, si la page est très éloignée de la page en cours d'affichage, alors un numéro de faible priorité lui est attribué.

Par exemple, si la page 155 concernant les résultats de la dernière compétition de tennis est affichée sur l'écran, le numéro de priorité 0 lui est attribué. Le numéro de priorité 1 est ensuite attribué aux pages les plus proches de la page affichée, c'est-à-dire les pages 154 et 156, le numéro de priorité 2 est attribué aux pages 153 et 157 qui sont les pages les plus proches des pages ayant le numéro de priorité 1. Le numéro de priorité 2 est également attribué à la première page de chaque bloc repéré par un lien dans les modes de navigation TOP, FLOF, etc. Par exemple, le numéro de priorité 2 est attribué à la page 125 correspondant au bloc sport, à la page 275 correspondant au bloc des informations du jour, à la page 150 correspondant au groupe du tennis, etc.

Le nombre de références contenu dans la liste peut être constant ou variable. Le contenu de la liste est mis à jour chaque fois que l'affichage d'une nouvelle page est demandé par l'utilisateur. La mise à jour est effectuée par un circuit extérieur de gestion de liste, non représenté sur la figure 2.

La mise à jour de la liste consiste à déterminer quelles sont les pages les plus proches de la nouvelle page affichée et à leur attribuer un nouveau numéro de priorité. La mise à jour est effectuée en fonction de la page en cours d'affichage, du contenu du service télétexte en cours de réception (nombre total de pages, hiérarchisation des pages, etc.) et du système de navigation utilisé. Plusieurs pages peuvent avoir un même numéro de priorité. De plus, le numéro de priorité d'une même page peut varier si la page en cours d'affichage varie.

La mémoire 24 est connectée d'une part au décodeur 21 pour recevoir les pages du service télétexte, et d'autre part au circuit de gestion de mémoire 25 pour recevoir des instructions de mémorisation.

La mémoire 24 comprend des pages du service télétexte, mémorisées lorsqu'elles sont reçues, en fonction des instructions reçues du circuit de gestion de la mémoire 25. La mémoire 24 comprend un nombre de pages qui varie notamment en fonction de la page en cours d'affichage et de la taille (en terme d'espace mémoire) des pages proches de la page en cours d'affichage.

La mémoire 26 est connectée au circuit de gestion de la mémoire. La mémoire 26 comprend une liste des pages contenues dans la mémoire de données 24, la liste comprenant par exemple, pour chaque page mémorisée, son numéro de référence, son numéro de priorité associé et son adresse dans la mémoire de données 24. Le contenu de la mémoire 26 varie au fur et à mesure de la mémorisation des pages demandées et il est mis à jour par le circuit de gestion 25.

La mémoire 27 est connectée au circuit de gestion de mémoire 25. Elle est utilisée pour mémoriser une variable PMIN qui est égale au numéro de priorité de la page de plus faible priorité mémorisée dans la mémoire de données 24. Par exemple, si la mémoire de données 24 comprend des pages de priorité 0, 1, 2 et 3, alors PMIN = 3.

Dans l'exemple de la figure 2, les mémoires 23, 24, 26, 27 sont considérées comme des mémoires différentes, mémorisant chacune une information différente. Il est cependant possible de remplacer ces mémoires par une unique mémoire comprenant, par exemple dans des zones de mémoire différentes, la liste des pages demandées, la liste des pages mémorisées, la variable PMIN et les pages télétexte précédemment mémorisées.

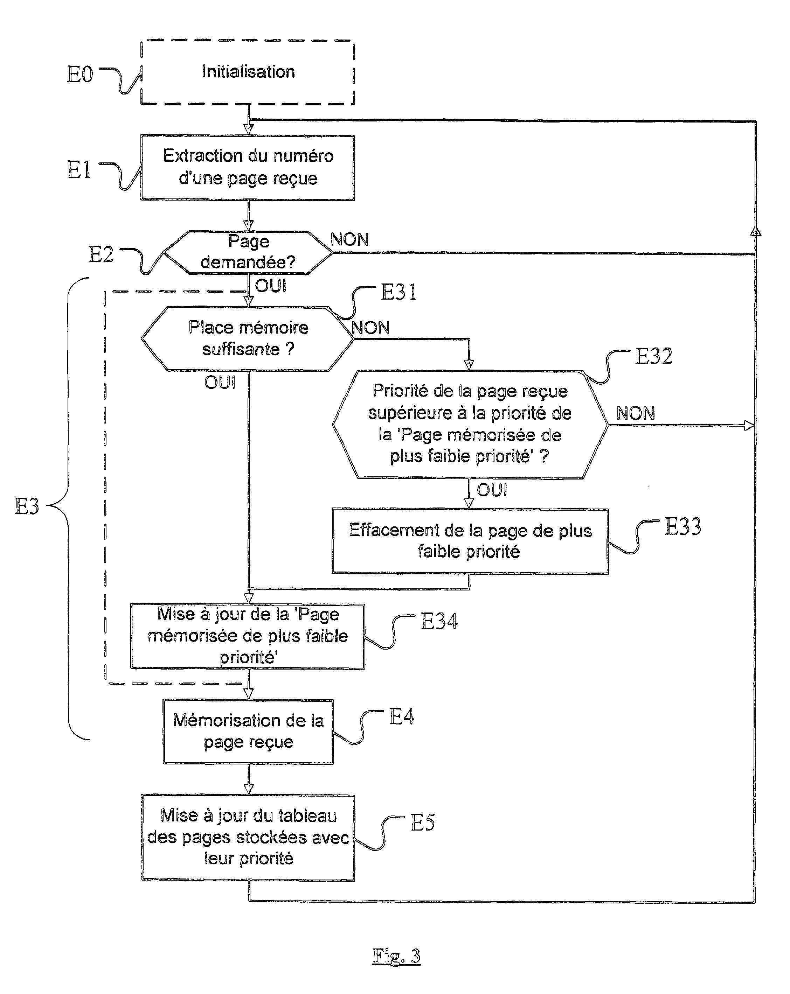

Le circuit de la figure 2 est utilisé pour mettre en oeuvre le procédé de l'invention, dont un exemple de diagramme est détaillé sur la figure 3.

On suppose dans l'exemple ci-dessous qu'une page est en cours d'affichage sur l'écran, qu'une liste de pages demandées, que des pages demandées, qu'une liste de pages mémorisées et que le numéro de priorité (PMIN) de la page de plus faible priorité sont mémorisées respectivement dans les mémoires 23, 24, 26, 27.

Au cours d'une étape E1, le décodeur 21 reçoit des données relatives à une page télétexte, et en extrait un numéro de référence (ou de page) de la page reçue.

Au cours d'une étape E2, le filtre 22 vérifie, à l'aide du numéro de référence de la page reçue et de la liste des pages demandées (contenue dans la mémoire 23), si la page reçue est une page demandée. Si la page reçue est une page demandée, alors réalisation d'une étape E3, sinon, réalisation d'une nouvelle étape E1.

Au cours d'une étape E3 d'évaluation du contenu de la mémoire, le circuit de gestion de la mémoire 25 décide si la page reçue doit être mémorisée ou pas, en fonction de la place disponible dans la mémoire de données 24 et du numéro de priorité de la page reçue. Si la page reçue ne doit pas être mémorisée, alors réalisation d'une nouvelle étape E1, sinon, réalisation d'une étape E4.

Au cours de l'étape E4 suivante, la page reçue est mémorisée dans la mémoire de données 24 puis la liste des pages déjà mémorisées est mise à jour par le circuit de gestion 25 au cours d'une étape E5. Finalement une nouvelle étape E1 est réalisée.

Le procédé est exécuté de manière cyclique, il peut être interrompu à tout moment par l'utilisateur, par une instruction de fin fournie depuis l'extérieur, par l'intermédiaire d'une télécommande par exemple.

Selon un premier mode de réalisation, l'étape E3 d'évaluation du contenu de la mémoire de données 24 se divise en quatre sous-étapes E31 à E34.

Au cours de l'étape E31, le circuit de gestion 25 vérifie si la place encore disponible dans la mémoire 24 est suffisante pour mémoriser la page reçue. Si la place libre est suffisante, alors réalisation de l'étape E34, sinon, réalisation de l'étape E32.

Au cours de l'étape E32, le circuit de gestion 25 compare le numéro de priorité de la page reçue avec la variable PMIN de la mémoire 27, c'est-à-dire avec le numéro de priorité de la page de plus faible priorité contenue dans la mémoire 24.

Si le numéro de priorité de la page reçue est supérieur à PMIN, alors on estime que la page reçue est moins importante que les pages déjà mémorisées, c'est-à-dire que la page reçue est plus éloignée de la page en cours d'affichage que les pages déjà mémorisées dans la mémoire 24. Il est alors moins probable que le spectateur demande l'affichage de la page reçue plutôt que l'affichage de l'une des pages déjà mémorisées. On estime dans ce cas qu'il n'est pas nécessaire de mémoriser la page reçue. L'étape E32 est alors interrompue et une nouvelle étape E1 est réalisée.

Inversement, si le numéro de priorité de la page reçue est inférieur à PMIN, alors on estime que la page reçue est plus importante que l'une au moins des pages déjà mémorisées, c'est-à-dire que la page reçue est plus proche de la page en cours d'affichage que l'une au moins des pages déjà mémorisées. Il est alors plus probable que le spectateur demande l'affichage de la page reçue plutôt que l'affichage de certaines des pages déjà mémorisées, notamment l'affichage de la page de plus faible priorité. On estime dans ce cas qu'il n'est pas nécessaire de conserver en mémoire la page de plus faible priorité et qu'au contraire il est indispensable de mémoriser la page reçue.

Ainsi, si le numéro de priorité de la page reçue est inférieur au numéro de priorité de la page de plus faible priorité déjà mémorisée, l'étape E33 est réalisée pour effacer la page de plus faible priorité de la mémoire de données 24 et ainsi libérer de la place dans la mémoire 24.

Au cours de l'étape E34, la variable PMIN contenue dans la mémoire 27 est mise à jour ; elle est alors égale au numéro de priorité de la nouvelle page de plus faible priorité. L'étape E34 est effectuée soit après une étape E31, soit après une étape E33.

Selon un autre mode de réalisation de l'étape E3, ladite étape E3 est répétée si la réponse au précédent test E31 est négative. L'étape E3 est même répétée plusieurs fois si nécessaire jusqu'à obtenir une réponse positive au test E31.

Ce mode de réalisation est notamment intéressant si les pages du service télétexte sont de tailles différentes. Il est en effet possible dans ce cas que la page reçue et à mémoriser soit de taille plus importante que la page de plus faible priorité. Il est alors préférable de vérifier que l'espace mémoire libéré au cours de la réalisation d'une étape E33 est suffisant pour mémoriser la page reçue.

D'autres variantes ou améliorations du procédé de l'invention peuvent être envisagées.

Par exemple, l'étape E33 est réalisée pour effacer une page de la mémoire 24 et ainsi libérer de la place pour une page plus proche de la page affichée. Il est possible de supprimer cette étape et d'écraser simplement, lors de la réalisation de l'étape E34, les données relatives à la page à effacer.

Il est également possible de réaliser une étape E0 d'initialisation du procédé au cours de laquelle une ou plusieurs des sous-étapes suivantes peuvent être réalisées :
- initialisation de la liste des pages demandées en mémorisant dans la mémoire 23 les références de la page de sommaire.
- initialisation de la liste des pages demandées en mémorisant, dans la mémoire 23, les références de la page de sommaire et les références des premières pages des différents blocs du service reçu. Le numéro de priorité 0 (priorité maximale) est attribué à la page de sommaire et le numéro de priorité 1 est attribué aux premières pages des blocs par exemple.
- initialisation de la liste des pages mémorisées et de la variable PMIN, effacement de la mémoire de données 24.

Dans l'exemple décrit ci-dessus, les numéros de priorité sont attribués aux pages du service de la manière suivante : priorité 0 pour la page de priorité maximale (la page affichée), priorité 1 pour les pages très proches de la page affichée, priorité 2 pour les pages un peu plus, etc. Il est bien sûr possible d'attribuer des numéros de priorité dans un ordre différent, par exemple priorité 100 pour la page de priorité maximale (la page affichée), priorité 99 pour les pages très proches de la page affichée, priorité 98 pour les pages un peu plus, etc. Dans ce cas on veillera à adapter en conséquence l'étape E32, l'essentiel étant, au cours de cette étape, de déterminer si la page reçue est moins importante que les pages déjà mémorisées ou pas.

Rappelons qu'une page X est plus importante qu'une page Y si la page X a une priorité plus forte que la page Y, c'est-à-dire si la page X est plus proche que la page Y d'une page affichée ou demandée par l'utilisateur.

## Revendications

1. Procédé de mémorisation de pages d'un service télétexte, au moins une page étant reçue par un circuit de mémorisation (20) d'un récepteur de télévision, le circuit de mémorisation comprenant une mémoire de données (24) pour mémoriser la au moins une page reçue, le procédé comprenant une étape d'extraction E1 d'un numéro de référence de ladite page reçue, une étape E2 de contrôle si ladite page reçue est une page demandée, et une étape de mémorisation E4 de ladite page reçue,
le procédé étant **caractérisé en ce qu'**il comprend également une étape d'évaluation E3 du contenu de la mémoire de données (24) pour décider si ladite page reçue doit être mémorisée, en fonction d'un espace libre dans la mémoire de données (24) et d'une importance de la page reçue, l'étape d'évaluation E3 étant réalisée après l'étape de contrôle E2, l'étape de mémorisation E4 étant réalisée si la page reçue doit être mémorisée.

2. Procédé selon la revendication 1, **caractérisé en ce que** l'étape d'évaluation E3 du contenu de la mémoire comprend les étapes suivantes :
E31 : comparaison d'une taille de l'espace libre dans la mémoire de données (24) avec une taille de la page reçue puis, si la taille de l'espace libre est inférieure à la taille de la page reçue, alors :
E32 : étude de l'importance de la page reçue.

3. Procédé selon la revendication 2, **caractérisé en ce que** l'étape E32 d'étude de l'importance de la page reçue se décompose de la manière suivante :
E32 : comparaison d'un numéro de priorité de la page reçue avec une variable de priorité (PMIN) égale à un numéro de priorité d'une page de plus faible priorité contenue dans la mémoire de données (24) puis :
- si le numéro de priorité de la page reçue est moins important que la variable de priorité (PMIN), alors réalisation d'une nouvelle étape d'extraction E1,
- sinon fin de l'étape E32.

4. Procédé selon la revendication 3, **caractérisé en ce que** l'étape E3 d'évaluation du contenu de la mémoire comprend également une étape d'effacement E33 de la page de plus faible priorité contenue dans la mémoire de données (24), l'étape d'effacement E33 étant effectuée après l'étape E32, l'étape d'effacement E33 étant effectuée si la page reçue a un numéro de priorité plus important que la variable de priorité..

5. Procédé selon l'une des revendications 3 ou 4, **caractérisé en ce que**, au cours de l'étape d'évaluation du contenu de la mémoire E3, une étape de mise à jour E34 de la variable de priorité (PMIN) est effectuée après l'étape E31 ou après l'étape E32 ou après l'étape E33.

6. Procédé selon la revendication 5, **caractérisé en ce que**, si une étape E32 a été réalisée au cours de l'étape E3, alors une nouvelle étape E31 est effectuée après l'étape E34.

7. Procédé selon la revendication 1, **caractérisé en ce que** l'étape E5 suivante est effectuée, après l'étape de mémorisation de la page reçue E4, et avant la réalisation d'une nouvelle étape E1 d'extraction d'un numéro de référence d'une page reçue :
E5 : mise à jour d'une liste des pages contenues dans la mémoire de données (24).

8. Circuit de réception et d'affichage de pages télétexte, comportant un circuit de mémorisation (20) comprenant :
- un décodeur (21) pour recevoir une page d'un service télétexte et en extraire un numéro de référence de la dite page reçue, et
- une mémoire de données (24) pour mémoriser ladite page reçue,
le circuit de réception et d'affichage étant **caractérisé en ce que** le circuit de mémorisation (20) comprend également :
- un filtre (22) pour vérifier si la page reçue est une page demandée et pour fournir le numéro de priorité de la page reçue,
- un circuit de gestion de mémoire (25) pour recevoir le numéro de priorité de la page reçue, et pour:
- mémoriser la page reçue si une taille d'un espace libre de la mémoire de données (24) est suffisante, ou
- étudier une importance de la page reçue sinon.

9. Circuit selon la revendication 8, **caractérisé en ce que** le circuit de gestion de mémoire (25) comprend des moyens pour comparer la taille de l'espace libre de la mémoire de données (24) avec une taille de la page reçue.

10. Circuit selon la revendication 8, **caractérisé en ce que**, pour étudier l'importance de la page reçue, le circuit de gestion de mémoire (25) comprend des moyens pour comparer le numéro de priorité de la page reçue avec une variable de priorité égale à un numéro de priorité d'une page de plus faible priorité contenue dans la mémoire de données (24).

11. Circuit selon la revendication 8, **caractérisé en ce que** le circuit de gestion de mémoire (25) comprend des moyens pour mettre à jour une liste des pages mémorisées comprenant, pour chaque page, le numéro de priorité correspondant.

12. Circuit selon la revendication 8, **caractérisé en ce que** le circuit de gestion de mémoire (25) comprend des moyens pour mettre à jour la page de plus faible priorité.

13. Récepteur de télévision, **caractérisé en ce qu'**il comprend un circuit de réception et d'affichage de pages télétexte selon l'une des revendications 8 à 12.

## Claims

1. A method of memorising pages of a teletext service in which at least one page is received by a memory circuit (20) of a television receiver, the memory circuit including a data memory (24) for memorising the said at least one received page, the method including an extraction step E1 for extraction of a reference number of the said received page, a control step E2 if the said received page is a requested page, and a memory step E4 for memorising the said received page,
the method being **characterised in that** it also includes an evaluation step E3, for evaluation of the contents of the data memory (24) whereby to decide whether the said received page should be memorised, as a function of a free space in the data memory (24) and of the size of the received page, the evaluation step E3 being carried out after the control step E2, the memory step E4 being carried out if the received page is to be memorised.

2. A method according to Claim 1, **characterised in that** the evaluation step E3 for the contents of the memory comprises the following steps:
E31: a comparison of the size of the free space in the data memory (24) with the size of the received page, and then, if the size of the free page is smaller than the size of the received page:
E32: an assessment of the magnitude of the received page.

3. A method according to Claim 2, **characterised in that** step E32, assessment of the magnitude of the received page, is broken down in the following way:
E32: a comparison of a priority number of the received page with a priority variable (PMIN) equal to a priority number of a page of lower priority contained in the data memory (24), and then:
- if the priority number of the received page is smaller than the priority variable (PMIN), then a fresh extraction step E1 is performed,
- if not, step E32 is terminated.

4. A method according to Claim 3, **characterised in that** the step E3 for evaluation of the contents of the memory further includes a deletion step E33 for deletion of the page of lowest priority contained in the data memory (24), a deletion step E33 being carried out after step B32, the deletion step E33 being carried out if the received page has a priority number higher than the priority variable.

5. A method according to Claim 3 or Claim 4, chazacterised in that in the course of step E3, evaluation the contents of the memory, a display step E34 in which the priority variable (PMIN) is displayed, is performed after step E31 or after step E32 or after step E33.

6. A method according to Claim 5, **characterised in that**, if a step E32 has been carried out during step E3, a new step E31 is then carried out after step E34.

7. A method according to Claim 1, **characterised in that** a step E5 is carried out as follows, after the memory step E4 in which the received page is memorised, and before a fresh step E1 for extraction of a reference number of a received page is carried out:
E5: display of a list of the pages contained in the data memory (24).

8. A circuit for receiving and displaying teletext pages, comprising a memory circuit (20) which includes:
- a decoder (21) for receiving a page of a teletext service and for extracting therefrom a reference number of the said received page, and
- a data memory (24) for memorising the said received page:
the receiving and display circuit being **characterised in that** the memory circuit (20) further includes:
- a filter (22) for verifying whether the received page is a requested page and for supplying the priority number of the received page,
- a memory management circuit (25) for receiving the priority number of the received page, and for:
- memorising the received page if a free space in the data memory (24) is large enough: or
- if not, assessing a magnitude for the received page.

9. A circuit according to Claim 8, **characterised in that** the memory management circuit (25) includes means for comparing the size of the free space in the data memory (24) with a size of the received page.

10. A circuit according to Claim 8, **characterised in that**, for assessment of the magnitude of the received page, the memory management circuit (25) includes means for comparing the priority number of the received page with a priority variable equal to a priority number of a page of lower priority contained in the data memory (24).

11. A circuit according to Claim 8, **characterised in that** the memory management circuit (25) includes means for displaying a list of the memorised pages comprising, for each page, the corresponding priority number.

12. A circuit according to Claim 8, **characterised in that** the memory management circuit (25) includes means for displaying the page of lowest priority.

13. A television receiver, **characterised in that** it includes a circuit for receiving and displaying teletext pages according to one of Claims 8 to 12.

## Patentansprüche

1. Verfahren zum Abspeichern von Seiten eines Teletext-Dienstes, wobei wenigstens eine Seite durch einen Speicherschaltkreis (20) eines Fernsehempfängers empfangen wird, wobei der Speicherschaltkreis einen Datenspeicher (24) umfasst, um wenigstens eine empfangene Seite zu speichern, wobei das Verfahren umfasst: einen Schritt E1 zum Extrahieren einer Referenzzahl aus der empfangenen Seite, einen Schritt E2 zum Überwachen, ob die empfangene Seite die angeforderte Seite ist, und einen Schritt E4 zum Abspeichern der empfangenen Seite, wobei das Verfahren **dadurch gekennzeichnet ist, dass**
auberdem ein Schritt E3 zum Evaluieren des Inhalts des Datenspeichers (24) vorgesehen ist, um in Abhängigkeit von einem freien Platz in dem Datenspeicher (24) und von dem Umfang der empfangenen Seite zu entscheiden, ob die empfangene Seite abgespeichert werden muss, wobei der Schritt E3 der Evaluierung nach dem Schritt E2 der Überwachung durchgeführt wird und der Schritt E4 des Abspeicherns durchgeführt wird, wenn die empfangene Seite abgespeichert werden muss.

2. Verfahren nach Anspruch 1, **dadurch gekennzeichnet, dass** der Schritt E3 der Evaluierung des Inhalts des Speichers die folgenden Schritte umfasst:
E31: Vergleichen der Größe eines freien Speicherplatzes in dem Datenspeicher (24) mit der Größe einer empfangenen Seite und anschließend, wenn die Größe eines freien Speicherplatzes kleiner als die Größe der empfangenen Seite ist:
E32: Überprüfen des Umfangs der empfangenen Seite.

3. Verfahren nach Anspruch 2, **dadurch gekennzeichnet, dass** der Schritt E32 der Überprüfung des Umfangs der empfangenen Seite sich auf die folgende Art zusammensetzt:
E32: Vergleichen einer Prioritätszahl der empfangenen Seite mit einer Prioritätsvariablen (PMIN), die gleich der Prioritätszahl einer Seite mit niedrigerer Priorität in dem Datenspeicher (24) ist, und anschließend:
wenn die Prioritätszahl der empfangenen Seite kleiner als die Prioritätsvariable (PMIN) ist, erneutes Durchführen des Schrittes E1 der Extraktion,
andernfalls Beenden von Schritt E32.

4. Verfahren nach Anspruch 3, **dadurch gekennzeichnet, dass** der Schritt E3 der Evaluierung des Inhalts des Speichers außerdem einen Schritt E33 zum Löschen der Seite mit der geringsten Priorität in dem Datenspeicher (24) umfasst, wobei der Löschschritt E33 nach dem Schritt E32 ausgeführt wird, wobei der Löschschritt E33 ausgeführt wird, wenn die empfangene Seite eine Prioritätszahl aufweist, die größer als die Prioritätsvariable ist.

5. Verfahren nach Anspruch 3 oder 4, **dadurch gekennzeichnet, dass** im Verlauf von Schritt E3 der Evaluierung des Inhaltes des Speichers ein Schritt E34 zum Aktualisieren der Prioritätsvariablen (PMIN) nach dem Schritt E31 oder nach den Schritt E32 oder nach dem Schritt E33 durchgeführt wird.

6. Verfahren nach Anspruch 5, **dadurch gekennzeichnet, dass** wenn ein Schritt E32 im Verlauf von Schritt E3 durchgeführt worden ist, dann erneut Schritt E31 nach dem Schritt E34 durchgeführt wird.

7. Verfahren nach Anspruch 1, **dadurch gekennzeichnet, dass** der nachfolgende Schritt E5 nach dem Schritt der Abspeicherung der empfangenen Seite E4 und vor der erneuten Durchführung von Schritt E1 der Extraktion einer Referenzzahl aus einer empfangenen Seite durchgeführt wird:
E5: Aktualisieren einer Liste von Seiten in dem Datenspeicher (24).

8. Schaltkreis zum Empfangen und Anzeigen von Seiten eines Teletext-Dienstes mit einem Speicherschaltkreis (20), der umfasst:
einen Dekodierer (21) zum Empfangen einer Seite eines Teletext-Dienstes und zum Extrahieren einer Referenzzahl der empfangenen Seite daraus und
einen Datenspeicher (24) zum Abspeichern der empfangenen Seite,
wobei der Schaltkreis zum Empfangen und Anzeigen **dadurch gekennzeichnet ist, dass** der Speicherschaltkreis (20) außerdem umfasst:
ein Filter (22) zum Verifizieren, ob die empfangene Seite eine angeforderte Seite ist, und Ausgeben der Prioritätszahl der empfangenen Seite,
einen Schaltkreis zum Verwalten des Speichers (25), um die Prioritätszahl der empfangenen Seite zu empfangen und um:
die empfangene Seite abzuspeichern, wenn die Größe eines freien Speicherplatzes des Datenspeichers (24) ausreicht, oder
andernfalls den Umfang einer empfangenen Seite zu überprüfen.

9. Schaltkreis nach Anspruch 8, **dadurch gekennzeichnet, dass** der Schaltkreis zum Verwalten des Speichers (25) Einrichtungen umfasst, um die Größe eines freien Speicherplatzes des Datenspeichers (24) mit der Größe einer empfangenen Seite zu vergleichen.

10. Verfahren nach Anspruch 8, **dadurch gekennzeichnet, dass** zum Überprüfen des Umfangs der empfangenen Seite der Schaltkreis zum Verwalten des Speichers (25) Einrichtungen umfasst, um die Prioritätszahl der empfangenen Seite mit einer Prioritätsvariablen zu vergleichen, die gleich der Prioritätszahl einer Seite mit geringerer Priorität in dem Datenspeicher (24) ist.

11. Verfahren nach Anspruch 8, **dadurch gekennzeichnet, dass** der Schaltkreis zum Verwalten des Speichers (25) Einrichtungen umfasst, um eine Liste von abgespeicherten Seiten zu aktualisieren, die die entsprechende Prioritätszahl für jede Seite enthält.

12. Verfahren nach Anspruch 8, **dadurch gekennzeichnet, dass** der Schaltkreis zum Verwalten des Speichers (25) Einrichtungen umfasst, um die Seite mit der geringsten Priorität zu aktualisieren.

13. Fernsehempfänger, **dadurch gekennzeichnet, dass** er einen Schaltkreis zum Empfangen und Anzeigen von Teletext-Seiten nach einem der Ansprüche 8 bis 12 umfasst.
